# EUROPÄISCHE PATENTANMELDUNG

(11) **EP 1 364 835 A2**
(43) Veröffentlichungstag der Anmeldung: **26.11.2003**
(21) Anmeldenummer: 03011494.6
(22) Anmeldetag: 21.05.2003
(51) Int. Cl.: B60R 19/44

(54) **Vorrichtung zum Schutz von Oberflächen**

(30) Priorität: 22.05.2002 DE 20207876 U
(71) Anmelder: Vama GmbH, 48149 Münster (DE)
(72) Erfinder: Tjong-Ayong, Vasco, 48149 Münster (DE)
(74) Vertreter: Helber, Friedrich G., Dipl.-Ing.

(57) **Zusammenfassung**

Vorrichtung zum Schutz von Oberflächen, insbesondere der Oberflächen von Stoßfängern von Kraftfahrzeugen gegen Beschädigungen.

Die Vorrichtung weist einen nach außen gewölbten elastischen Körper (1) auf, welcher auf der entgegengesetzten Seite mit einem Saugnapf (3) versehen ist, der eine lösbare haftende Verbindung auf der zu schützenden Oberfläche ermöglicht. Die Verbindung des Saugnapfs (3) mit dem elastischen Körper (1) kann über ein - bevorzugt als sich bei Druckbeanspruchung in der Federlänge verkürzende Schraubenfeder (2) ausgebildete - Feder erfolgen.

## Beschreibung

Die Erfindung betrifft eine Vorrichtung zum Schutz von Oberflächen, insbesondere der Oberflächen von Stoßfängern von Kraftfahrzeugen.

Moderne Personenkraftwagen sind häufig mit Stoßfängern (Stoßstangen) ausgerüstet, die in der gleichen Farbe wie die Karosserie lackiert sind. Auch bei leichten Berührungen mit den Stoßfängern anderer Personenkraftwagen, beispielsweise beim Ein- oder Ausparken, können sich daher Kratzer ergeben, die den Wert des Fahrzeugs vermindern können. Dies ist insbesondere bei Leasing-Fahrzeugen der Fall, wenn der Leasing-Geber vom Leasing-Nehmer verlangt, jegliche Kratzer zu entfernen.

Aufgabe der vorliegenden Erfindung ist es, die Oberflächen von Stoßfängern von Kraftfahrzeugen und gegebenenfalls auch andere Oberflächen zu schützen.

Diese Aufgabe wird bei der erfindungsgemäßen Vorrichtung dadurch gelöst, dass ein auf einer Seite gewölbter elastischer Körper auf der entgegengesetzten Seite mit einem Saugnapf versehen ist.

Die erfindungsgemäße Vorrichtung kann leicht auf gefährdete Stellen aufgebracht werden, ohne diese in irgendeiner Weise zu verändern, so dass auch keine Spuren nach einem Entfernen der erfindungsgemäßen Vorrichtung verbleiben. Außerdem ist die erfindungsgemäße Vorrichtung preiswert herstellbar.

Eine vorteilhafte Ausgestaltung besteht darin, dass der elastische Körper hohl ist und über eine Feder mit dem Saugnapf verbunden ist, wobei die Feder vorzugsweise eine Schraubenfeder ist.

Eine andere vorteilhafte Ausgestaltung besteht darin, dass der elastische Körper die Form einer Halbkugel aufweist, wobei wiederum vorzugsweise der Durchmesser des elastischen Körpers größer als der Durchmesser des Saugnapfs im befestigten Zustand ist. Dadurch wird der Saugnapf verdeckt, so dass die Halbkugel scheinbar in der Nähe der zu schützenden Oberfläche schwebt.

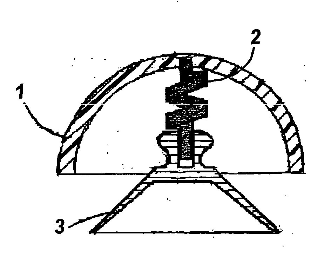

Ein Ausführungsbeispiel der Erfindung ist in der Zeichnung dargestellt und in der nachfolgenden Beschreibung näher erläutert.

Die Zeichnung zeigt einen Längsschnitt durch das Ausführungsbeispiel mit einer Halbkugel 1, einer Schraubenfeder 2 und einem Saugnapf 3. Die Schraubenfeder 2 ist in entsprechende Löcher in der Halbkugel 1 und im Saugnapf 3 eingesetzt und kann dort je nach Erfordernissen im Einzelnen verklebt sein oder kraft- und/oder formschlüssig gehalten werden. Die in der Zeichnung dargestellten Abmessungen sind ebenfalls nur beispielhaft und können je nch Bedürfnissen verändert werden.

## Patentansprüche

1. Vorrichtung zum Schutz von Oberflächen, insbesondere der Oberflächen von Stoßfängern von Kraftfahrzeugen,
**dadurch gekennzeichnet,**
**dass** ein auf einer Seite gewölbter elastischer Körper (1) auf der entgegengesetzten Seite mit einem Saugnapf (3) versehen ist.

2. Vorrichtung nach Anspruch 1, **dadurch gekennzeichnet,**
**dass** der elastische Körper (1) hohl ist und über eine Feder (2) mit dem Saugnapf (3) verbunden ist.

3. Vorrichtung nach Anspruch 2, **dadurch gekennzeichnet,**
**dass** die Feder eine Schraubenfeder (2) ist.

4. Vorrichtung nach einem der Ansprüche 1 bis 3, **dadurch gekennzeichnet, dass** der elastische Körper (1) die Form einer Halbkugel aufweist.

5. Vorrichtung nach einem der vorhergehenden Ansprüche, **dadurch gekennzeichnet, dass** der Durchmesser des elastischen Körpers (1) größer als der Durchmesser des Saugnapfs (3) im befestigten Zustand ist.
